# EUROPÄISCHE PATENTSCHRIFT

(11) **EP 4 147 620 B1**
(45) Veröffentlichungstag und Bekanntmachung des Hinweises auf die Patenterteilung: **27.11.2024**
(21) Anmeldenummer: 22195080.1
(22) Anmeldetag: 12.09.2022
(51) Int. Cl.: A47K 13/24, A47K 13/10, G06F 3/16

(54) **VORRICHTUNG ZUR ÜBERWACHUNG DER RAUMLAGE EINES OBJEKTS**
DEVICE FOR MONITORING THE SPATIAL POSITION OF AN OBJECT
DISPOSITIF DE SURVEILLANCE DE LA POSITION SPATIALE D'UN OBJET

(30) Priorität: 14.09.2021 DE 102021123778
(43) Veröffentlichungstag der Anmeldung: 15.03.2023
(60) Teilanmeldung: 24206924.3
(73) Patentinhaber: Ketzer GmbH, 45139 Essen (DE)
(72) Erfinder: Ketzer, Dietmar, 45309 Essen (DE)
(74) Vertreter: Bendele, Tanja

(56) Entgegenhaltungen:
- WO-A1-2021/060208
- WO-A1-99/38428
- KR-B1- 102 007 945

## Beschreibung

Gegenstand der Erfindung ist eine Vorrichtung in Form eines ebenen Bauteils mit mindestens einer Längsachse zur Überwachung der Raumlage eines Objekts, insbesondere eines Toilettendeckels oder von empfindlicher Fracht, umfassend eine Stromversorgung und eine integrierte Schaltung sowie ein programmierbares Akustikmodul zur Wiedergabe mindestens einer Tonaufnahme, und mindestens eine Steuerungseinheit, durch welche eine Aktivierung und/oder Deaktivierung des Akustikmoduls bewirkbar ist, wobei die Steuerungseinheit mindestens einen Sensor und/oder mindestens einen Aktor umfasst, der auf eine Neigungsänderung des Bauteils gegenüber der Vertikalen oder gegenüber der Horizontalen mittels Auslösung der Wiedergabe der mindestens einen Tonaufnahme reagiert. Ferner ist Gegenstand der Erfindung ein System umfassend Vorrichtung und Objekt sowie ein Verfahren und die Verwendung der Vorrichtung zur Überwachung der Raumlage eines Objekts.

Sprechende Vorrichtungen, welche über ein programmierbares Akustikmodul zur Wiedergabe von Tonaufnahmen verfügen, sind aus dem Stand der Technik hinreichend bekannt. Solche Vorrichtungen weisen in der Regel einen Bewegungssensor auf, welcher die Wiedergabe der jeweiligen Tonaufnahme von der physischen Präsenz des betreffenden Adressaten abhängig macht.

So offenbart DE202019005192U1 einen sprechenden Briefkasten, der mit einem akustischen

Sound System Modul samt Lichtsensor ausgestattet ist und Postboten oder Zusteller vom Einwerfen unerwünschter Werbung abhalten soll. DE29904306U1 hingegen beschreibt ein Trägerelement für Reklame sowie Werbe- und Sicherheitshinweise, dessen Sprach- bzw. Musikmodul beim Vorbeigehen des Käufers oder Interessenten in Betrieb gesetzt wird und diesen damit bei Eintritt in den entsprechenden Produktbereich direkt anspricht. Darüber hinaus kann die In- und Außerbetriebnahme des Sprach- bzw. Musikmoduls auch mechanisch, Licht-optisch oder durch Handbetätigung ausgelöst werden.

Dokument WO99/38428 A1 offenbart eine Vorrichtung auf einem Toilettendeckel die eine Melodie abspielen kann, und einen Neigungsschalter aufweist.

Damit ist den sprechenden Vorrichtungen aus dem Stand der Technik gemeinsam, dass ihre Aktivierung und/oder Deaktivierung mit einer Überwachung der äußeren Veränderungen in der unmittelbaren Umgebung zusammenhängt, insbesondere in Bezug auf die An- bzw. Abwesenheit des betreffenden Adressaten. Darüber hinaus könnte es in einigen Lebenssituationen aber auch vorteilhaft sein, wenn solche Vorrichtungen den Zustand eines zugehörigen Objekts überwachen und über diesen mittels eines akustischen Reizes Auskunft geben würde.

Beispielsweise könnte auf diese Weise verhindert werden, dass sich das betreffende Objekt über einen längeren Zeitraum in einer falschen Raumlage befindet, indem die sprechende Vorrichtung über diesen Zustand Auskunft geben und zur Korrektur desselben anregen würde. Dies ist auf die Position eines Toilettendeckels ebenso anwendbar wie auf die Positionierung empfindlicher Fracht.

Somit besteht Bedarf an einer sprechenden Vorrichtung, die über Veränderungen des Zustands eines ihr zugeordneten Objekts Auskunft geben kann.

Der vorliegenden Erfindung liegt daher die Aufgabe zu Grunde, eine Vorrichtung bereitzustellen, welche Zustandsveränderungen, vorzugsweise in Bezug auf die räumliche Lage, Orientierung und/oder Ausrichtung, eines zugehörigen Objekts mittels eines akustischen Reizes kommunizieren kann. Insbesondere sollte die Vorrichtung auf Veränderungen in Bezug auf die Raumlage des Objekts, wie eines Toilettendeckels oder von empfindlicher Fracht, durch Wiedergabe einer Tonaufnahme aufmerksam machen und dokumentieren. Dabei sollte eine solche Vorrichtung als Massenprodukt herstellbar und beliebigen Objekten zuordenbar sein.

Die Aufgabe der Erfindung wird gelöst durch eine Vorrichtung gemäß Anspruch 1 sowie durch ein Verfahren nach Anspruch 10, ein System nach Anspruch 12 und die Verwendung nach Anspruch 14.

Ausführungsformen der Erfindung sind in den Unteransprüchen sowie in der Beschreibung detailliert offenbart.

Erfindungsgemäß wird die Aufgabe der vorliegenden Erfindung dadurch gelöst, dass die Vorrichtung eine Steuerungseinheit zur Aktivierung und/oder Deaktivierung eines programmierbaren Akustikmoduls aufweist, welche mindestens ein Steuerungselement (Sensor und/oder Aktor) umfasst, das auf eine Neigungsänderung der Vorrichtung gegenüber der Vertikalen oder gegenüber der Horizontalen, insbesondere gegenüber der Lotrichtung, mittels Auslösung der Wiedergabe der mindestens einen Tonaufnahme reagiert. Besonders bevorzugt ist eine Vorrichtung, welche in Form eines möglichst dünnen Aufklebers vorliegt und deren Steuerungseinheit ein Steuerungselement umfasst, das auf eine Neigungsänderung der Vorrichtung mittels Auslösung der Wiedergabe der mindestens einen Tonaufnahme reagiert, wenn die Längsachse der Vorrichtung von der Vertikalen oder von der Horizontalen, insbesondere von der Lotrichtung, um mindestens 1°, bevorzugt mindestens 0,1°, besonderes bevorzugt mindestens 0,01°, abweicht.

Auf diese Weise kann mittels der erfindungsgemäßen Vorrichtung die Raumlage eines Objektes, in welches die Vorrichtung integriert oder auf dessen Oberfläche die Vorrichtung befestigt ist, überwacht werden. Beispielsweise kann die erfindungsgemäße Vorrichtung im Zusammenhang mit einem Toilettendeckel verwendet werden, um den jeweiligen Nutzer darauf aufmerksam zu machen, dass dieser bei Verlassen der Örtlichkeit nicht geschlossen wurde. Ebenso kann die erfindungsgemäße Vorrichtung als Warentransportbegleiter eingesetzt werden, um beim Transport der betreffenden Waren eine bestimmte Lagerrichtung, wie etwa aufrechtstehend, zu erzwingen. Zudem kann in einer Weiterentwicklung die nicht korrekte Lagerung aufgezeichnet und eine eventuelle Beschädigung an der jeweiligen Ware dokumentiert werden.

Die erfindungsgemäße Vorrichtung ist somit dazu geeignet, lageabhängig vorprogrammierte Töne oder aufgezeichnete Texte wiederzugeben, um einen Nutzer in seinem Handeln zu korrigieren oder zu einem anderen Handeln zu bewegen. Dabei kann die Vorrichtung je nach Verwendung einen Bewegungsmelder oder einen Präsenzsensor umfassen, welcher eine entsprechende Reaktion auslöst, wenn der Nutzer der Vorrichtung begegnet oder aber sich aus ihrem Umkreis entfernt.

Soweit im Rahmen der vorliegenden Erfindung von Raumlage eines Objekts gesprochen wird, wird unter diesem Begriff die Ausrichtung des Objekts zum umgebenden Raum verstanden, insbesondere bezüglich der Horizontalen bzw. der Vertikalen. Die Horizontale wird dabei als waagerechte Linie in der Ebene eines idealen Horizonts mit der Lotrichtung als Normalenvektor angesehen. Die Vertikale hingegen entspricht der Lotrichtung, ist also die örtliche Richtung der Schwerebeschleunigung, welche senkrecht auf den Niveauflächen des Erdschwerefeldes steht. Vertikale und Horizontale stehen orthogonal aufeinander.

In diesem Sinne wird die Raumlage des Objekts im Wesentlichen durch dessen Steigung bestimmt und betrifft daher den Winkel zwischen der Grundfläche bzw. Längsachse des Objekts und dem örtlichen Horizont. Darüber hinaus umfasst die Raumlage auch die Orientierung des Objekts relativ zur Nordrichtung, insbesondere für den Fall, dass sich das Objekt bewegt, sowie teilweise auch dessen Höhe.

Damit ist die erfindungsgemäße Vorrichtung zur Überwachung einer Kombination aus Lage, Orientierung und Ausrichtung eines Objekts geeignet. Insbesondere kann die erfindungsgemäße Vorrichtung über Veränderungen in Bezug auf die Neigung des Objekts Auskunft geben. Diese Neigungsänderung kann sowohl als Winkelveränderung bezüglich der Vertikalen als auch als Winkelveränderung bezüglich der Horizontalen verstanden werden. Vorzugsweise wird die Neigungsänderung als Abweichung der Längsachse der erfindungsgemäßen Vorrichtung von der Lotrichtung verstanden.

Gegenstand der Erfindung ist eine Vorrichtung in Form eines ebenen Bauteils mit mindestens einer Längsachse, vorzugsweise eines möglichst dünnen Aufklebers, zur Überwachung der Raumlage eines Objekts, insbesondere eines Toilettendeckels oder als Transportbegleiter, umfassend eine Stromversorgung und eine integrierte Schaltung sowie ein programmierbares Akustikmodul zur Wiedergabe mindestens einer Tonaufnahme, und mindestens eine Steuerungseinheit, durch welche eine Aktivierung und/oder Deaktivierung des Akustikmoduls bewirkbar ist, wobei die Steuerungseinheit mindestens einen Sensor und/oder mindestens einen Aktor umfasst, der auf eine Neigungsänderung des Bauteils gegenüber der Vertikalen oder gegenüber der Horizontalen, insbesondere der Lotrichtung, mittels Auslösung der Wiedergabe der mindestens einen Tonaufnahme reagiert.

Demgemäß umfasst die erfindungsgemäße Vorrichtung, insbesondere das Bauteil, eine Stromversorgung und eine integrierte Schaltung sowie ein programmierbares Akustikmodul, das über eine Steuerungseinheit gesteuert wird. Darüber hinaus kann die erfindungsgemäße Vorrichtung ein Zeitmodul, ein Element zur Anwesenheitserkennung (Bewegungserkennung) und/oder eine Speichereinheit umfassen. Weitere, insbesondere elektronische Komponenten, wie etwa eine visuelle Anzeige, können nach Belieben hinzugefügt werden.

Gegenstand der Erfindung ist ebenso eine Vorrichtung mit einem Bauteil mit einer Klebeschicht, wobei mit der Klebeschicht das Bauteil an einem Objekt oder an Fracht anbringbar ist, und wobei beim Versuch die Vorrichtung von der Fracht oder dem Objekt zu entfernen eine Tonaufnahme ausgelöst wird und/oder die Steuerungseinheit eine Sendeeinheit umfasst, die ein Signal an einen Empfänger übermittelt und/oder die Klebeschicht und optional das Bauteil bersten und eine Markierung, insbesondere farbige Markierung, auf dem Objekt oder an der Fracht angebracht wird.

Als Stromversorgung wird eine Komponente der erfindungsgemäßen Vorrichtung verstanden, die elektrische Energie liefert (Spannungsquelle). Erfindungsgemäß ist die Stromversorgung eine Metall-Luft-Batterie. Beispielshafte Batterien werden nachfolgend genannt, wie eine Alkali-Mangan-Batterie, Zinkchlorid-Batterie, Zink-Kohle-Batterie, Zink-Luft-Batterie, Quecksilberoxid-Zink-Batterie, Silberoxid-Zink-Batterie, Nickel-Oxyhydroxid-Batterie, Lithiumbatterie, Lithium-Eisensulfid-Batterie oder Aluminium-Luft-Batterie, insbesondere eine Knopfzelle, ein Akkumulator oder eine Solarzelle.

Vorteil der Metall-Luft-Batterien ist die Möglichkeit diese sehr klein auszuführen, da sich eine hohe Energiedichte aufweisen. Zudem besitzt Metall-Luft-Batterien eine relativ waagerechte Entladungskurve, das heißt, sie entlädt sich mit gleichmäßiger Spannung und sie besitzt eine hohe Energiedichte (= hohe Energie pro Raumvolumen).

Besonders bevorzugt ist die Stromversorgung eine Primärbatterie, bevorzugt eine Metall-Luft-Batterie, insbesondere umfassend Zink-Luft Batterie, Lithium-Luft-Batterie, Eisen-Luft-Batterie, Lithium-Luft-Batterie, Natrium-Luft-Batterie, Silicium-Luft-Batterie, Calcium-Luft-Batterie, Aluminium-Luft-Batterie und/oder Magnesium-Luft Batterie. Metall-Luft-Batterien sind besonders bevorzugt, da diese über eine hohe Energiedichte verfügen und aus günstigen Rohstoffen hergestellt werden können und/oder sehr flach ausgeführt werden können.

Dabei kann es erfindungsgemäß bevorzugt sein, wenn die Stromversorgung austauschbar, insbesondere eine austauschbare Lithium-Zelle ist, um eine Wiederverwendung der erfindungsgemäßen Vorrichtung zu ermöglichen. Alternativ kann es aber auch bevorzugt sein, wenn die erfindungsgemäße Vorrichtung ein Wegwerfartikel ist, insbesondere nicht zur mehrmaligen Verwendung vorgesehen ist und daher lediglich eine fest verbaute Primärbatterie, vorzugsweise eine Metall-Luft-Batterie, umfasst.

Die integrierte Schaltung der erfindungsgemäßen Vorrichtung entspricht einer elektronischen Schaltung, die vorzugsweise auf einem dünnen Plättchen aus Halbleiter-Material aufgebracht ist. Sie stellt die Funktionalität der erfindungsgemäßen Vorrichtung sicher.

So ermöglicht sie beispielsweise einen Betrieb des Akustikmoduls, welches dazu ausgelegt ist einen akustischen Reiz, also Töne, Klänge, Melodien und/oder Rhythmen, auszusenden.

Insbesondere ist das Akustikmodul dazu ausgelegt, mindestens eine Tonaufnahme, insbesondere mindestens zwei verschiedene Tonaufnahmen, in Abhängigkeit von der Raumlage des Objekts wiederzugeben. Dabei wir im Rahmen der vorliegenden Erfindung unter dem Begriff Tonaufnahme die Aufzeichnung von Schall, also von Geräuschen, Tönen, Musik und/oder Sprache, mit Audiorekordern zur späteren Wiedergabe verstanden. Eine sprechende Vorrichtung umfasst daher erfindungsgemäß sowohl die Wiedergabe von Sprache als auch von Geräuschen, Tönen und/oder Musik.

Aus diesem Grund ist das Akustikmodul der erfindungsgemäßen Vorrichtung vorzugsweise mit einer programmierbaren Soundkarte und einem Lautsprecher versehen. Überdies kann das Akustikmodul einen An- bzw. Aus-Schalter besitzen, welcher eine manuelle Aktivierung/Deaktivierung des Akustikmoduls ermöglicht.

Des Weiteren kann das Akustikmoduls vorzugsweise durch äußere mechanische oder optische, insbesondere Licht-optische, Reize sowie Schallwellen aktiviert und/oder deaktiviert werden. Dazu weist die Vorrichtung, insbesondere das Bauteil, erfindungsgemäß eine Steuereinheit auf, welche die Aktivierung und/oder Deaktivierung des Akustikmoduls bewirken kann. Unter Steuereinheit wird dabei eine elektronische Komponente, vorzugsweise ein Microkontroller, verstanden, welche zur Steuerung des Akustikmoduls, vorzugsweise zur Wiedergabe der mindestens einen Tonaufnahme und/oder zur Aktivierung/Deaktivierung des Akustikmoduls, vorgesehen ist. Die erfindungsgemäße Vorrichtung, insbesondere das Bauteil, kann eine oder mehrere Steuerungseinheiten umfassen.

Erfindungsgemäß umfasst die Steuerungseinheit ein Steuerungselement, insbesondere mindestens einen Sensor und/oder mindestens einen Aktor, der auf eine Neigungsänderung des Bauteils gegenüber der Vertikalen oder gegenüber der Horizontalen mittels Auslösung der Wiedergabe der mindestens einen Tonaufnahme reagiert. Dabei werden im Rahmen der vorliegenden Erfindung unter dem Begriff Sensoren technische Elemente verstanden, die bestimmte physikalische oder chemische Eigenschaften qualitativ oder als Messgröße quantitativ erfassen und in ein weiter verarbeitbares elektrisches Signal umformen können, während als Aktoren antriebstechnische Elemente bezeichnet werden, die ein elektrisches Signal in mechanische Bewegungen bzw. Veränderungen physikalischer Größen umsetzen und damit aktiv in die Steuerung eingreifen können. Folglich stellen Aktoren das Gegenstück zu den Sensoren dar.

In diesem Sinne ist der mindestens eine Sensor dazu ausgelegt, eine Neigungsänderung des Bauteils bzw. des Objekts zu erfassen und in ein elektrisches Signal umzuformen, welches innerhalb der Steuerungseinheit weiterverarbeitet wird und letztendlich zur Wiedergabe der mindestens einen Tonaufnahme führt. Der mindestens eine Aktor hingegen ist dazu ausgelegt, die Wiedergabe der mindestens einen Tonaufnahme bei einer Neigungsänderung des Bauteils bzw. des Objekts direkt zu initiieren.

Der mindestens eine Sensor und der mindestens eine Aktor können sowohl alleine als auch in Kombination vorhanden sein. So kann es erfindungsgemäß bevorzugt sein, wenn der mindestens eine Sensor und der mindestens eine Aktor zusammenwirken, insbesondere indem der mindestens eine Sensor eine Neigungsänderung erfasst und an die elektronische Steuerung sendet, welche daraufhin den mindestens einen Aktor anweist, die Wiedergabe der mindestens einen Tonaufnahme auszulösen.

Dabei ist es erfindungsgemäß bevorzugt, wenn der mindestens eine Sensor und/oder der mindestens eine Aktor auf eine Neigungsänderung entsprechend einem Winkel von größer gleich 1° bis kleiner gleich 180°, vorzugsweise entsprechend einem Winkel von größer gleich 1° bis kleiner gleich 90°, mittels Wiedergabe der mindestens einen Tonaufnahme reagiert. Insbesondere reagiert der mindestens eine Sensor und/oder der mindestens eine Aktor, wenn das Bauteil bzw. das Objekt eine zuvor eingenommene Raumlage um mindestens 1° gegenüber der Vertikalen und gegenüber der Horizontalen, vorzugsweise gegenüber der Lotrichtung, ändert.

So kann es vorgesehen sein, dass der mindestens eine Sensor und/oder der mindestens eine Aktor insbesondere auf eine Neigungsänderung entsprechend einem Winkel von 90° reagiert. Eine solche Neigungsänderung kommt beispielsweise durch das Öffnen eines Toilettendeckels zustande, bei dem sich das Bauteil bzw. das Objekt zunächst in einer zur Lotrichtung orthogonalen Ebene befindet und anschließend um 90° geneigt wird. Alternativ kann es vorgesehen sein, dass der mindestens eine Sensor und/oder der mindestens eine Aktor bereits auf geringste Neigungsänderungen, insbesondere auf eine Neigungsänderung entsprechend einem Winkel von mindestens 1 °, mindestens 0,1 ° oder sogar mindestens 0,01° reagiert. Diese Genauigkeit ist beispielsweise bei der Überwachung empfindlicher Fracht, wie etwa von Impfstoff, vorteilhaft.

In einer bevorzugten Ausführungsform der erfindungsgemäßen Vorrichtung reagiert daher der mindestens eine Sensor und/oder der mindestens eine Aktor auf eine Neigungsänderung mittels Auslösung der Wiedergabe der mindestens einen Tonaufnahme, wenn die Längsachse des Bauteils von der Vertikalen oder von der Horizontalen, insbesondere von der Lotrichtung, um mindestens 1°, bevorzugt mindestens 0,1°, besonders bevorzugt mindestens 0,01° abweicht. Demgemäß ist die Vorrichtung zunächst derart in bzw. an dem Objekt zu positionieren, dass die Längsachse des Bauteils mit der Vertikalen oder mit der Horizontalen, insbesondere mit der Lotrichtung, zusammenfällt. Die betreffende Abweichung der Längsachse des Bauteils von der Vertikalen oder von der Horizontalen, insbesondere von der Lotrichtung, kann auch mindestens 5°, mindestens 10° oder mindestens 20° betragen.

Im Rahmen der vorliegenden Erfindung kann die Neigungsänderung des Bauteils gegenüber der Vertikalen und gegenüber der Horizontalen sowohl mithilfe eines direkten Steuerungselements als auch mithilfe eines indirekten Steuerungselements erfasst werden. Dabei werden unter direkten Steuerungselementen solche Sensoren bzw. Aktoren verstanden, die auf eine direkte Erfassung der Neigungsänderung an sich gerichtet sind, während indirekte Steuerungselemente diese aus der Überwachung weiterer physikalischer und/oder chemischer Größen herleiten.

Bevorzugte Steuerungselemente umfassen mechanische und/oder elektronische Steuerungselemente. Insbesondere ist das mindestens eine Steuerungselement der erfindungsgemäßen Vorrichtung ausgewählt aus induktiven Steuerungselementen, kapazitiven Steuerungselementen, piezoelektrischen Steuerungselementen, optischen Steuerungselementen, akustischen Steuerungselementen und/oder magnetischen Steuerungselementen. So kann es erfindungsgemäß bevorzugt sein, wenn das mindestens eine Steuerungselement der erfindungsgemäßen Vorrichtung mindestens einen Neigungssensor umfasst, der den genauen Bezug zur Lotrichtung herstellt. Dies kann beispielsweise durch einen dem Lot nachempfundenen, mechanisch oder elektromagnetisch gelagerten Pendelkörper bewerkstelligt werden, dessen Lage elektronisch, induktiv, kapazitiv oder optisch gemessen wird. Ebenso kann eine Neigungsänderung auch mithilfe von Flüssigkeiten bestimmt werden, indem entweder die Reflexion oder Brechung eines Lichtstrahls durch den Flüssigkeitsspiegel oder der Widerstand bzw. die Kapazität in Abhängigkeit von der Lage der Flüssigkeit gemessen wird.

In einer besonders bevorzugten Ausführungsform der vorliegenden Vorrichtung ist der mindestens eine Sensor ein Neigungsmesser und/oder der mindestens eine Aktor ein Neigungsschalter, insbesondere ein Quecksilber-Neigungsschalter oder ein Kugellageschalter. Ein Neigungsmesser ist ein Messinstrument zur Messung der Steigung eines Objekts, welches in der Lage ist, den Neigungsgrad des Objekts elektronisch in einen Messwert umzusetzen, der anschließend von der elektronischen Schaltung aufgenommen und verarbeitet werden kann. Dabei handelt es sich vorzugsweise um eine elektronische Wasserwage. Ein Neigungsschalter hingegen ist ein elektrischer Schalter, der bei Überschreitung einer bestimmten Neigung einen Stromkreis schließt oder öffnet. Erfindungsgemäß bevorzugte Neigungsschalter umfassen jegliche Steuerungselemente, die in der Lage sind, bei einer Neigungsänderung des Objekts den zum Akustikmodul gehörigen Stromkreis zur Wiedergabe der mindestens einen Tonaufnahme mechanisch oder elektronisch zu öffnen oder zu schließen.

In diesem Sinne ist der Neigungsschalter vorzugsweise ein Quecksilber-Neigungsschalter. Bei diesem handelt es sich um ein teilweise mit Quecksilber gefülltes, gegebenenfalls gebogenes Glasrohr mit zwei elektrischen Kontakten, die beim Kippen über einen bestimmten Neigungswinkel durch das Quecksilber leitend verbunden werden. Weiter bevorzugt ist der erfindungsgemäße Neigungsschalter ein mechanischer Kugelschalter, bei dem das Öffnen bzw. Schließen des Stromkreises je nach Neigungsgrad mittels einer innenbefindlichen Metallkugel erfolgt. Überdies kann der Neigungsschalter auch als elektronischer Neigungsschalter vorliegen, dessen Funktionsweise den Eigenschaften mechanischer Neigungsschalter nachempfunden ist. Der jeweiligen Schaltzustand in Bezug auf den Stromkreis kann an die elektronische Schaltung geliefert und entsprechend verarbeitet werden.

Darüber hinaus sind als Steuerungselemente der Steuerungseinheit der erfindungsgemäßen Vorrichtung die folgenden Sensoren bzw. Aktoren denkbar:
- mindestens ein Beschleunigungssensor mit Richtungserkennung, welcher die Bewegungsrichtung der erfindungsgemäßen Vorrichtung erfasst und Bewegungsrichtung und Endlage an die elektronische Schaltung liefert, die die Endlage mit oder ohne Zusammenhang der Bewegungsrichtung entsprechend verarbeitet.
- mindestens ein Lichtsensor, insbesondere mindestens eine Fotozelle, welche den Lichteinfall auf die erfindungsgemäße Vorrichtung erfasst und die Zustandsänderung von dunkel nach hell oder von hell nach dunkel an die elektronische Schaltung liefert, die die Endlage der Vorrichtung entsprechend verarbeitet.

- mindestens ein Reed-Kontakt (Magnetkontakt), bei dem der Stromkreis geöffnet oder geschlossen wird sobald sich die erfindungsgemäße Vorrichtung beim Aufrichten oder Neigen einem Magneten nähert, welcher am jeweiligen Endpunkt angebracht ist. Dies betrifft analog jegliche über einen Neigungsvorgang mechanisch oder elektronisch schließenden Kontaktart, mittels derer der Neigungszustand von der elektronischen Schaltung wahrgenommen und verarbeitet werden kann.
- mindestens ein Druckschalter, insbesondere aus der erfindungsgemäßen Vorrichtung herausgeführter Druckschalter, der im Bereich des zu überwachenden Objektes an geeigneter Stelle positioniert wird und in der Lage ist, Druck in einen elektrischen Impuls umzusetzen, der von der elektronischen Schaltung wahrgenommen und verarbeitet werden kann.
- mindestens ein pneumatischer Mikroschalter, insbesondere in der erfindungsgemäßen Vorrichtung befindlicher pneumatischer Mikroschalter, welcher durch Druckaufbau in einem kleinen, aus der Vorrichtung herausgeführten Blasebalg beim Zusammendrücken des Blasebalgs pneumatisch/mechanisch betätigt wird, was die elektronische Schaltung entsprechend verarbeitet.

Die von der erfindungsgemäßen Vorrichtung umfassten Steuerungselemente, insbesondere Sensoren und/oder Aktoren, können jeweils einzeln oder in Kombination eingesetzt werden.

Sobald mittels des mindestens einen Sensors und/oder des mindestens einen Aktors die Wiedergabe der mindestens einen Tonaufnahme ausgelöst wurde, wird diese vorzugsweise als Dauerschleife abgespielt bis der betreffende Nutzer die Raumlage des betreffenden Objekts korrigiert hat. Zudem kann es erfindungsgemäß bevorzugt sein, wenn die Steuerungseinheit ein Zeitmodul, insbesondere einen Kondensator, umfasst, welches die Wiedergabe der mindestens einen Tonaufnahme nach einer vorgegebenen Zeit abbricht. So kann die Wiedergabe der mindestens einen Tonaufnahme beispielsweise nach einer Minute, zwei Minuten, drei Minuten, vier Minuten oder fünf Minuten abgebrochen werden, wenn der betreffende Nutzer die in der mindestens einen Tonaufnahme enthaltene Anweisung ignoriert und die Raumlage nicht korrigiert. Alternativ kann die Wiedergabe der mindestens einen Tonaufnahme durch den An-/Aus-Schalter des Akustikmoduls und damit die manuelle Aktivierung/Deaktivierung des Akustikmoduls abgebrochen werden.

In einer weiter bevorzugten Ausführungsform der vorliegenden Vorrichtung umfasst die Steuerungseinheit ferner mindestens ein Element zur Anwesenheitserkennung, insbesondere einen Bewegungsmelder oder einen Präsenzsensor, welches eine Aktivierung und/oder Deaktivierung des Akustikmoduls bewirkt. Auf diese Weise kann die Wiedergabe der mindestens einen Tonaufnahme insofern geregelt werden, dass der mindestens eine Sensor und/oder der mindestens eine Aktor entweder nur bei Anwesenheit oder nur bei fehlender Anwesenheit einer Person in einem vorgegebenen Bereich um das Objekt, insbesondere in einem Bewegungsradius von kleiner gleich 1 m, bevorzugt in einem Bewegungsradius von größer gleich 0,3 m bis kleiner gleich 1,5 m, besonders bevorzugt von größer gleich 0,5 m bis kleiner gleich 5 m, mittels Auslösung der Wiedergabe der mindestens einen Tonaufnahme reagiert.

Dabei kann eine Anwesenheitserkennung bzw. Bewegungserkennung in Bezug auf eine in einem vorgegebenen Bereich um das Objekt befindliche Person mittels üblicher Verfahren, insbesondere aktiv mittels elektromagnetischer Wellen, wie Hochfrequenzwellen, Mikrowellen oder Radarwellen, sowie Ultraschall oder passiv anhand der Infrarot-Strahlung der betreffenden Person und der Umgebung erfolgen. Vorzugsweise handelt es sich bei dem Element zur Anwesenheitserkennung um einen Infrarotmelder oder einen, insbesondere richtungsorientieren, Radarmelder. Zudem kommt ein auf Ultraschallerkennung und Ultraschallmessung basierendes Element zur Anwesenheitserkennung in Betracht.

Die Aktivierung und/oder Deaktivierung des Akustikmoduls kann erfindungsgemäß sowohl beim Eindringen einer Person in den vorgegebenen Bereich um das Objekt als auch beim Verlassen desselben stattfinden. Insbesondere kann die mindestens eine Tonaufnahme genau dann wiedergegeben werden, wenn die Person in den vorgegebenen Bereich um das Objekt eindringt, beispielsweise um einen Begrüßungstext abzuspielen. Umgekehrt kann die mindestens eine Tonaufnahme genau dann wiedergegeben werden, wenn die Person den vorgegebenen Bereich um das Objekt verlässt und insbesondere dessen Raumlage zu korrigieren ist.

Demgemäß umfasst eine besonders bevorzugte Steuerungseinheit der erfindungsgemäßen Vorrichtung einen Bewegungsmelder und/oder einen Präsenzmelder. Dabei werden sowohl der Bewegungsmelder als auch der Präsenzmelder als Element zur Anwesenheitserkennung bzw. Bewegungserkennung verstanden, jedoch mit dem Unterschied, dass der Präsenzmelder wesentlich empfindlichen auf die Anwesenheit einer Person in einem vorgegebenen Bereich um das Objekt bzw. auf deren Bewegung reagiert als der Bewegungsmelder.

Vorzugsweise ist das Element zur Anwesenheitserkennung daher a. ein Bewegungsmelder, der eine Aktivierung des Akustikmoduls bei Anwesenheit und optional eine Deaktivierung des Akustikmoduls bei fehlender Anwesenheit mindestens einer Person in einem vorgegebenen Bereich um das Objekt bewirkt, und/oder b. ein Präsenzmelder, der eine Deaktivierung des Akustikmoduls bei Anwesenheit und optional eine Aktivierung des Akustikmoduls bei fehlender Anwesenheit mindestens einer Person in einem vorgegebenen Bereich um das Objekt bewirkt.

Das Element zur Anwesenheitserkennung, insbesondere der Bewegungsmelder, kann darüber hinaus gleichzeitig als das mindestens eine Steuerungselement verwendet werden, das bei einer Neigungsänderung des Bauteils gegenüber der Vertikalen oder gegenüber der horizontalen mittels Auslösung der Wiedergabe der mindestens einen Tonaufnahme reagiert.

Die jeweils umfassten elektronischen Komponenten der erfindungsgemäßen Vorrichtung sind vorzugsweise gemeinsam in oder auf dem Bauteil angeordnet. Insbesondere stellen die jeweils umfassten elektronischen Komponenten der erfindungsgemäßen Vorrichtung ein gemeinsames Bauteil, insbesondere ein eingliedriges Bauteil, dar. Alternativ können die jeweils umfassten elektronischen Komponenten der erfindungsgemäßen Vorrichtung nur teilweise in oder auf dem Bauteil angeordnet sein und teilweise als externe, vorzugsweise zum Bauteil beabstandete, Einheit vorliegen. So kann es beispielsweise erfindungsgemäß bevorzugt sein, wenn das Akustikmodul, insbesondere eine Wiedergabeeinrichtung des Akustikmoduls, als externe Einheit ausgebildet ist, die vorzugsweise mit der Steuerungseinheit der erfindungsgemäßen Vorrichtung drahtlos verbindbar ist. Des Weiteren können Teile der jeweils umfassten elektronischen Komponenten der erfindungsgemäßen Vorrichtung, insbesondere das Akustikmodul, zu einem externen Gerät, insbesondere einem Mobiltelefon gehören, und vorzugsweise mittels einer entsprechenden Applikation angesteuert und/oder ausgeführt werden.

Die Dicke des Bauteils wird durch die jeweils umfassten elektronischen Komponenten bestimmt, wobei gilt: je dünner desto besser. In diesem Sinne ist es erfindungsgemäß bevorzugt, wenn das Bauteil eine Höhe von größer gleich 0,1 mm bis kleiner gleich 20 mm, bevorzugt größer gleich 1 mm bis kleiner gleich 15 mm, besonders bevorzugt größer gleich 5 mm bis kleiner gleich 10 mm, aufweist. Besonderes bevorzugt weist das Bauteil eine Höhe von um 8 ± 0,5 mm auf. Alternativ bevorzugt ist eine Höhe von um 3 ± 0,5 mm, insbesondere wenn das Bauteil mit einem 3D-Drucker hergestellt wird.

In diesem Sinne wird unter einem dünnen Bauteil, insbesondere einem (möglichst) dünnen Aufkleber, ein Bauteil mit den zuvor genannten Höhen verstanden. Die Höhe des Bauteils wird dabei vorzugsweise senkrecht zu dessen Grundfläche gemessen und beschreibt den Abstand zwischen Ober- und Unterseite des Bauteils, insbesondere zwischen dessen Oberseite und dem betreffenden Objekt.

Das Bauteil kann aus jedem beliebigen Material, das für die geplante Verwendung geeignet ist, hergestellt sein. Dies umfasst insbesondere ein polymeres oder metallisches Material, Pappe oder Karton, Folie, Holz, Glas und/oder Keramik. Insbesondere ist das Bauteil aus einem starren oder flexiblen elektrisch isolierenden Trägermaterial hergestellt, umfassend Hartpapier, mit Epoxidharz getränkte Glasfasermatten, Teflon, Aluminiumoxid, Keramik und/oder Polyesterfolie. Zudem kann das Bauteil mit einer äußeren Hülle versehen sein, welche je nach geplanter Verwendung wasserdicht, UV-beständig und/oder beständig gegen Reinigungsmittel sein sollte. Nach einer besonders bevorzugten Ausgestaltung ist die Vorrichtung in Form eines Bauteils vollständig mit einer Hülle umschlossen, die zumindest bereichsweise eine luftdurchlässige Membran aufweist. Die luftdurchlässige Membran erlaubt die Luftzufuhr für die mindestens eine Metall-Luft-Batterie. Nach einer besonders bevorzugten Ausgestaltung ist die Hülle feuchtigkeitsdicht und/oder luftdurchlässig ausgestaltet, insbesondere ist die Hülle eine feuchtigkeitsdichte und luftdurchlässige Membran. Des Weiteren ist es bevorzugt, wenn die Hülle aus einer thermoplastischen Membran ist. Eine solche Membran kann in der Fertigung thermisch verschweißt werden oder thermisch auf das Bauteil aufgeschrumpft werden. Daher ist nach einer Ausführungsform die Hülle eine aufgeschrumpfte thermoplastische feuchtigkeitsdicht und/oder luftdurchlässig Membran.

Dabei weist das Bauteil, insbesondere samt äußerer Hülle, vorzugsweise eine Länge von höchstens 50 cm und eine Breite von höchstens 25 cm, bevorzugt eine Größe von größer gleich 1 cm x 0,5 cm bis kleiner gleich 30 cm x 15 cm, besonders bevorzugt von größer gleich 5 cm x 2,5 cm bis kleiner gleich 15 cm x 7,5 cm, auf. Insbesondere kann das Bauteil mit Blick auf seine Oberseite jede beliebige zweidimensionale Form besitzen, vorzugsweise die Form eines Polygons, wie eines Rechteckts oder Dreiecks, oder die Form eines Kreises. In diesem Zusammenhang wird unter Längsachse des Bauteils die Achse verstanden, die der Richtung seiner größten Ausdehnung entspricht. Dies kann beispielsweise eine der Symmetrieachsen des Rechtecks, eine der Winkelhalbierenden des Dreiecks oder der Durchmesser des Kreises sein.

Die Oberfläche des Bauteils, insbesondere der äußeren Hülle, kann eben sein oder aber jedes beliebige dreidimensionale Profil aufweisen. So kann es erfindungsgemäß bevorzugt sein, wenn die Oberfläche des Bauteils mit Erhebungen und Vertiefungen versehen, insbesondere erhaben, ist. Vorzugsweise kann die Oberfläche des Bauteils eine dreidimensionale Gesichtsform aufweisen, bei der optional die Augen als Leuchtdioden ausgestaltet sind. Dies umfasst insbesondere Smileys, Karikaturen und/oder Tiergesichter.

In einer besonders bevorzugten Ausführungsform der vorliegenden Erfindung ist das Bauteil, insbesondere die Vorrichtung selbst, ein Aufkleber, vorzugsweise dünner Aufkleber, welcher auf die Oberfläche des Objekts geklebt werden kann. In diesem Sinne kann es erfindungsgemäß vorteilhaft sein, wenn die erfindungsgemäße Vorrichtung oder das Bauteil eine, insbesondere selbsthaftende, Klebeschicht, die vollflächig oder teilflächig aufgetragen sein kann, aufweist. Dabei umfassen bevorzugte Klebeschichten mindestens einen Klebstoff, insbesondere einen chemisch härtenden und/oder physikalisch abbindenden Klebstoff oder einen Haftklebstoff. Vorzugsweise ist der mindestens eine Klebstoff der Klebeschicht ein Haftklebstoff, der ausgewählt ist aus Acrylat-, Kautschuk- und/oder Silikon-Klebstoff. Dies hat den Vorteil, dass die Klebeschicht bei Raumtemperatur eine mehr oder weniger stark ausgeprägte Dauerklebrigkeit aufweist und unter leichtem Druck eine gute Haftung zu verschiedenen Oberflächen ausbilden kann. Überdies kann die Vorrichtung in der Regel rückstandfrei wieder entfernt werden.

Darüber hinaus kann es erfindungsgemäß bevorzugt sein, wenn das Bauteil an seiner Oberseite, insbesondere der Klebeschicht gegenüberliegenden Seite, mit einem Pfeil versehen ist, welcher die optimale Positionierung der Vorrichtung am Objekt vereinfachen soll. So kann der Pfeil parallel zu oder auf der Längsachse des Bauteils angeordnet sein und zeigt vorzugsweise nach oben, ist also entgegengesetzt zur Lotrichtung zu positionieren. Dies ist insofern vorteilhaft, dass insbesondere bei Verwendung der erfindungsgemäßen Vorrichtung als Warentransportbegleiter eine Raumlage, bei der das Objekt auf dem Kopf steht, von der gewünschten Raumlage des Objekts zu unterscheiden ist.

Eine erfindungsgemäß besonders bevorzugte Vorrichtung umfasst ferner eine Speichereinheit, die zur Aufzeichnung jeder Neigungsänderung des Bauteils gegenüber der Vertikalen oder gegenüber der Horizontalen, insbesondere gegenüber der Lotrichtung, vorgesehen ist. Vorzugsweise ist die Speichereinheit dazu ausgelegt, jede Neigungsänderung, die einer unerwünschten Raumlage des zu überwachenden Objekts entspricht, aufzuzeichnen. Unter einer Speichereinheit wird erfindungsgemäß eine elektronische Komponente, insbesondere ein Halbleiterspeicher, wie ein handelsüblicher Speicherchip, verstanden. Die Speichereinheit kann entweder ausgebaut oder über eine Schnittstelle ausgelesen werden, um beispielsweise den gesamten Transportweg des Objekts rückwirkend zu überwachen.

Demgemäß ist es erfindungsgemäß weiter bevorzugt, wenn die Vorrichtung, insbesondere das Bauteil, eine entsprechende Schnittstelle (Interface), insbesondere USB- oder Infrarot-Schnittstelle, umfasst. Die Schnittstelle kann vorzugsweise Informationen in Form von physikalischen oder logischen Größen auf analogem oder digitalem Wege mit einem externen Gerät, wie einem externen Computer, austauschen. Dabei können die Informationen auch die Programmierung des programmierbaren Akustikmoduls oder den Kontakt mit externen Sensoren betreffen.

Als weitere elektronische Komponente kann die erfindungsgemäße Vorrichtung zudem eine visuelle Anzeige umfassen, welche die Wiedergabe der mindestens einen Tonaufnahme durch das Akustikmodul visuell unterstützen kann. Eine solche visuelle Anzeige umfasst vorzugsweise mindestens eine LED (*ligth emitting diode*), insbesondere mindestens zwei verschiedenfarbige LEDs, die den jeweiligen Zustand des Objekts in Bezug auf die Raumlage kennzeichnen.

Gegenstand der vorliegenden Erfindung ist auch ein Verfahren zur Überwachung der Raumlage eines Objekts, insbesondere eines Toilettendeckels oder als Transportbegleiter, in dem
I) eine erfindungsgemäße Vorrichtung in das Objekt integriert oder auf dessen Oberfläche befestigt, und
II) die Raumlage des Objekts mittels des mindestens einen Sensors und/oder des mindestens einen Aktors überwacht wird.

So kann die erfindungsgemäße Vorrichtung in I) in das Objekt eingebaut, insbesondere fest verbaut, oder auf dessen Oberfläche angebracht, insbesondere geklebt, geschweißt, geschraubt, genagelt oder mittels Magneten montiert, werden. Vorzugsweise wird die erfindungsgemäße Vorrichtung, insbesondere in Form eines möglichst dünnen Aufklebers, auf die Oberfläche des Objekts, insbesondere die Unterseite des Toilettendeckels, geklebt, insbesondere selbsthaftend geklebt. Dabei ist es besonders bevorzugt, wenn die Längsachse des Bauteils parallel zur Längsachse und/oder zur Vertikalachse, insbesondere auf der Längsachse und/oder der Vertikalachse, des Objekts positioniert wird.

Anschließend kann die Raumlage des Objekts in II) überwacht werden, indem der mindestens eine Sensor und/oder der mindestens eine Aktor auf eine Neigungsänderung des Objekts gegenüber der Vertikalen oder gegenüber der Horizontalen, insbesondere gegenüber der Lotrichtung, mittels Auslösung der Wiedergabe der mindestens einen Tonaufnahme reagiert. Dabei kann es erfindungsgemäß vorteilhaft sein, wenn der mindestens eine Sensor und/oder der mindestens eine Aktor entweder nur bei Anwesenheit oder nur bei fehlender Anwesenheit einer Person in einem vorgegebenen Bereich um das Objekt, insbesondere in einem Bewegungsradius von kleiner gleich 1 m, mittels Auslösung der Wiedergabe der mindestens einen Tonaufnahme reagiert.

In einer bevorzugten Ausführungsform des erfindungsgemäßen Verfahrens wird daher in II)
i. das Akustikmodul beim Eindringen mindestens einer Person in einen vorgegebenen Bereich um das Objekt aktiviert wird oder das Akustikmodul beim Verlassen mindestens einer Person eines vorgegeben Bereich um das Objekt aktiviert wird, so dass
ii. der mindestens eine Sensor und/oder der mindestens eine Aktor auf eine Neigungsänderung des Objekts gegenüber der Vertikalen oder gegenüber der Horizontalen mittels Auslösung der Wiedergabe der mindestens einen Tonaufnahme reagiert, und optional
iii. die Wiedergabe der mindestens einen Tonaufnahme nach einer vorgegebenen Zeit abgebrochen.

Dies hat den Vorteil, dass die Wiedergabe der mindestens einen Tonaufnahme, insbesondere die Wiedergabe von mindestens zwei unterschiedlichen Tonaufnahmen, als Reaktion auf entweder die Öffnung eines Toilettendeckels oder aber die nicht erfolgte bzw. versehentlich erfolgte Schließung des Toilettendeckels stattfinden könnte. So könnte im ersten Fall beim Öffnen des Toilettendeckels ein frei programmierbarer Begrüßungstext oder ein Aufmerksamkeitston wiedergegeben werden, nachdem die erfindungsgemäße Vorrichtung eine Person in dem betreffenden Bewegungsradius um den Toilettendeckel registriert und sich aktiviert hat. Ebenso könnte ein weiterer frei programmierbarer Text oder Ton beim Schließen des Toilettendeckels abgespielt werden. Anschließend könnte sich die erfindungsgemäße Vorrichtung bis zum nächsten Öffnen des Toilettendeckels deaktivieren. Im Zweiten Fall hingegen, könnte als akustischer Hinweis ein entsprechend aufgenommener Text oder ein Signalton wiedergegeben werden, wenn die Person den betreffenden Bewegungsradius um den Toilettendeckel verlassen hat, ohne den Toilettendeckel zu schließen. Alternativ könnte der akustische Hinweis aber auch wiedergegeben werden, wenn die Person den betreffenden Bewegungsradius um den Toilettendeckel verlassen hat, und den Toilettendeckel versehentlich geschlossenen hat, da dieser immer geöffnet bleiben sollte. Der akustische Hinweis könnte dann so oft wiederholt werden, bis der Toilettendeckel geschlossen bzw. wieder geöffnet ist. Bei vollständiger Ignoranz könnte sich das Gerät nach einer vorgegebenen, insbesondere werksseitig oder durch den Nutzer eingestellten, Zeit in den Ruhezustand begeben und sich vorzugsweise beim erneuten Betreten des betreffenden Bewegungsradius mit dem Begrüßungstext oder Aufmerksamkeitston melden.

Die Aktivierung des Akustikmoduls in II) i. kann vorzugsweise auch sowohl beim Eindringen mindestens einer Person in einen vorgegebenen Bereich um das Objekt als auch beim Verlassen mindestens einer Person eines vorgegeben Bereich um das Objekt stattfinden. Dazu kann es erfindungsgemäß vorteilhaft sein, wenn die Vorrichtung zwei unterschiedliche Steuerungseinheiten mit je mindestens einem Element zur Anwesenheitserkennung, insbesondere eine erste Steuerungseinheit umfassend einen Bewegungsmelder und eine zweite Steuerungseinheit umfassend einen Präsenzsensor, umfasst und vorzugsweise der mindestens eine Sensor und/oder mindestens eine Aktor auf eine Neigungsänderung des Objekts gegenüber der Vertikalen oder gegenüber der Horizontalen mittels Auslösung der Wiedergabe von mindestens zwei unterschiedlichen Tonaufnahmen reagiert. Darüber hinaus kann für eine Neigungsänderung von der Horizontalen in die Vertikale eine andere Tonaufnahme wiedergegeben werden als von der Vertikalen in die Horizontale.

Ein weitere Gegenstand der vorliegenden Erfindung ist ein System umfassend ein Objekt und eine erfindungsgemäße Vorrichtung zur Überwachung der Raumlage des Objekts, wobei die Vorrichtung in das Objekt integriert oder auf dessen Oberfläche befestigt ist. Dementsprechend ist das erfindungsgemäße System vorzugsweise aus mindestens zwei Bestandteilen aufgebaut, nämlich aus einem beliebigen Objekt, insbesondere einem Toilettendeckel oder einem Transportgut, und der erfindungsgemäßen Vorrichtung. Dabei kann die erfindungsgemäße Vorrichtung in das Objekt eingebaut, insbesondere fest verbaut, oder auf dessen Oberfläche angebracht, insbesondere geklebt, geschweißt, geschraubt, genagelt oder mittels Magneten montiert, sein. Vorzugsweise ist die erfindungsgemäße Vorrichtung auf die Oberfläche des Objekts geklebt, insbesondere selbsthaftend geklebt.

In einer bevorzugten Ausführungsform des erfindungsgemäßen Systems ist das Objekt ein Toilettendeckel, wobei der mindestens eine Sensor und/oder der mindestens eine Aktor auf eine Öffnung und/oder Schließung des Toilettendeckels reagiert. Vorzugsweise ist die erfindungsgemäße Vorrichtung derart in den Toilettendeckel integriert oder auf dessen Unterseite befestigt, insbesondere geklebt, dass die Längsachse des Bauteils parallel zur Längsachse des Toilettendeckels ausgerichtet ist, insbesondere mit der Längsachse des Toilettendeckels zusammenfällt. In diesem Sinne ist es erfindungsgemäß vorteilhaft, wenn die Längsachse des Bauteils und/oder des Toilettendeckels bei geöffnetem Toilettendeckel im Wesentlichen parallel und bei geschlossenem Toilettendeckel im Wesentlichen orthogonal zur Lotrichtung verläuft.

Bei anderen Objekten ist die Positionierung der erfindungsgemäßen Vorrichtung hingegen vom jeweils angestrebten Zweck abhängig. So kann es erfindungsgemäß bevorzugt sein, wenn die erfindungsgemäße Vorrichtung auf der Oberseite oder aber auf mindestens einer, insbesondere senkrechten, Seitenfläche des Objekts befestigt wird. Dementsprechend kann die Längsachse entweder orthogonal oder aber parallel zur Lotrichtung verlaufen. Bevorzugt wird die erfindungsgemäße Vorrichtung derart in das jeweilige Objekt integriert oder auf eine seiner (senkrechten) Seitenflächen befestigt, insbesondere geklebt, dass die Längsachse des Bauteils parallel zur Vertikalachse des Objekts und/oder zur Lotrichtung verläuft. Besonders bevorzugt ist die erfindungsgemäße Vorrichtung dabei mit einem parallel zur Längsachse des Bauteils angeordneten Pfeil versehen, dessen Spitze entgegengesetzt zur Lotrichtung zeigt. Auf diese Weise können auch solche Raumlagen des Objekts identifiziert werden, die von der gewünschten Raumlage um genau 180° abweichen, beispielsweise innerhalb eines Transportmittels.

So kann das Objekt des erfindungsgemäßen Systems alternativ auch ein Transportgut, wie etwa Paket, Päckchen, Kiste, Fass, Sack, Beutel, Kanister oder Container, insbesondere enthaltend empfindliche Fracht, sein, wobei der mindestens eine Sensor und/oder der mindestens eine Aktor auf eine nicht korrekte Lagerung des Transportguts reagiert. So kann mittels der erfindungsgemäßen Vorrichtung verhindert werden, dass das Transportgut nicht gerade, insbesondere aufrecht stehend, lagert, indem mittels eines Warntons auf die nicht korrekte Lagerung hingewiesen wird. Darüber hinaus könnte die nicht korrekte Lagerung vorzugsweise über den gesamten Transportweg aufgezeichnet werden, um dem Transporteur eventuelle Beschädigungen nachzuweisen.

Gleichfalls ein Gegenstand der Erfindung ist daher die Verwendung der erfindungsgemäßen Vorrichtung als Transportbegleiter, insbesondere zur Überwachung der Raumlage von empfindlicher Fracht, wie beispielsweise Impfstoff. Als empfindliche Fracht werden insbesondere fragile Transportgüter und Waren verstanden.

Die erfindungsgemäße Vorrichtung kann als Transportbegleiter für jegliche Waren eingesetzt werden, bei denen eine Überwachung der Transportbedingungen, insbesondere in Bezug auf ihre räumliche Lage, Orientierung und/oder Ausrichtung, erforderlich scheint. Dies umfasst sowohl zerbrechliche Waren, wie Weinflaschen oder Glasgegenstände, als auch leicht zu beschädigende Waren, wie etwa empfindliche Tapeten. Darüber hinaus kann die erfindungsgemäße Vorrichtung auch zum Schutz des in einem Objekts enthaltenen Inhalts eingesetzt werden, etwa um die lückenlose Aufrechterhaltung der erforderlichen Raumlage einer Impfstofflieferung zu garantieren.

Ebenso kann es erfindungsgemäß bevorzugt sein, wenn die Vorrichtung als Erinnerungshilfe, insbesondere zur Schließung eines Toilettendeckels, verwendet wird. Das zugehörige Einsatzgebiet kann sich dabei auf den gesamten öffentlichen Hygienebereich, wie insbesondere Gemeinschaftstoiletten, Besuchertoiletten, Toiletten in Einkaufshäusern, an Park- oder Rastplätzen, Tankstellen, in Büros, Praxen, Schulen, Kindergärten, Flüchtlingsheimen oder ähnlichem erstrecken. Ebenso ist ein Einsatz der erfindungsgemäßen Vorrichtung als Gadget, welches als Erinnerungshilfe zur Schließung des Toilettendeckels im Privatbereich verwendet wird, denkbar.

Die Erfindung wird anhand der Figuren näher erläutert, ohne die Erfindung auf diese Ausführungsbeispiele zu begrenzen. Es zeigen:
- **Fig. 1a,b,c:**: Ausführungsformen der erfindungsgemäßen Vorrichtung **0**
- **Fig. 2:**: verschiedene Ausrichtungen einer erfindungsgemäßen Vorrichtung **0** in Bezug auf die Horizontale **h** und die Vertikale **v**
- **Fig.3,a:**: ein System **100** umfassend einen Toilettendeckel **10a** und eine erfindungsgemäße Vorrichtung **0**
- **Fig.4:**: ein System **100** umfassend ein Paket **10b** und eine erfindungsgemäße Vorrichtung **0** als Transportbegleiter

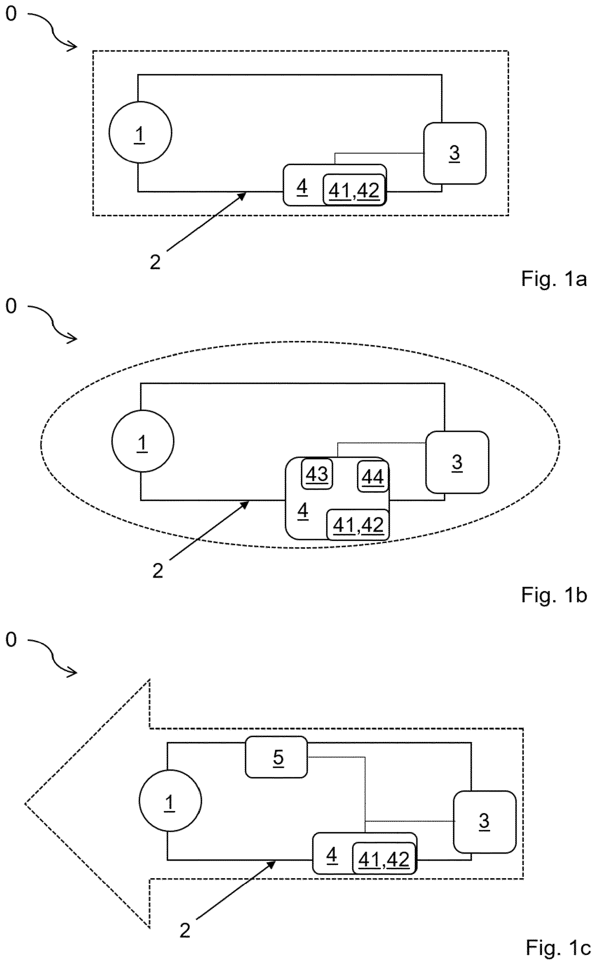

Die **Figuren 1a, 1b und 1c** zeigen jeweils eine erfindungsgemäße Vorrichtung **0** in Form eines ebenen Bauteils mit mindestens einer Längsachse, umfassend eine Stromversorgung **1,** eine integrierte Schaltung **2** und ein programmierbares Akustikmodul **3** zur Wiedergabe mindestens einer Tonaufnahme sowie mindestens eine Steuerungseinheit **4,** durch welche eine Aktivierung und/oder Deaktivierung des Akustikmoduls **3** bewirkbar ist. Zur Überwachung der Raumlage eines Objekts umfasst die Steuerungseinheit **4** mindestens einen Sensor **41** und/oder mindestens einen Aktor **42** umfasst, der auf eine Neigungsänderung des Bauteils gegenüber der Vertikalen oder gegenüber der Horizontalen mittels Auslösung der Wiedergabe der mindestens einen Tonaufnahme reagiert.

So ist die in **Figur 1a** dargestellte Ausführungsform in Form eines Rechtseckts ausgebildet, dessen Längsachse der Seitenhalbierenden der kürzeren Rechteckseiten entspricht. Die Ausführungsform in Figur **1b** hingegen weist die Form einer Ellipse auf, bei der die Längsachse mit deren großer Achse zusammenfällt. Dabei umfasst die Steuerungseinheit **4** der Vorrichtung 0 ferner ein Zeitmodul **43,** welches die Wiedergabe der mindestens einen Tonaufnahme nach einer vorgegebenen Zeit abbricht, sowie ein Element zur Anwesenheitserkennung **44,** welches eine Aktivierung und/oder Deaktivierung des Akustikmoduls **3** bewirkt. Figur 3c stellt eine Ausführungsform in Form einer Pfeils dar, wobei der Längsachse der Symmetrieachse des Pfeils entspricht, und der die optimale Positionierung der Vorrichtung 0 an einem Objekt vereinfachen soll, beispielsweise indem er entgegengesetzt zur Lotrichtung ausgerichtet wird. Die Vorrichtung **0** umfasst zusätzlich eine Speichereinheit **5,** die zur Aufzeichnung jeder Neigungsänderung des Bauteils gegenüber der Vertikalen oder gegenüber der Horizontalen vorgesehen ist.

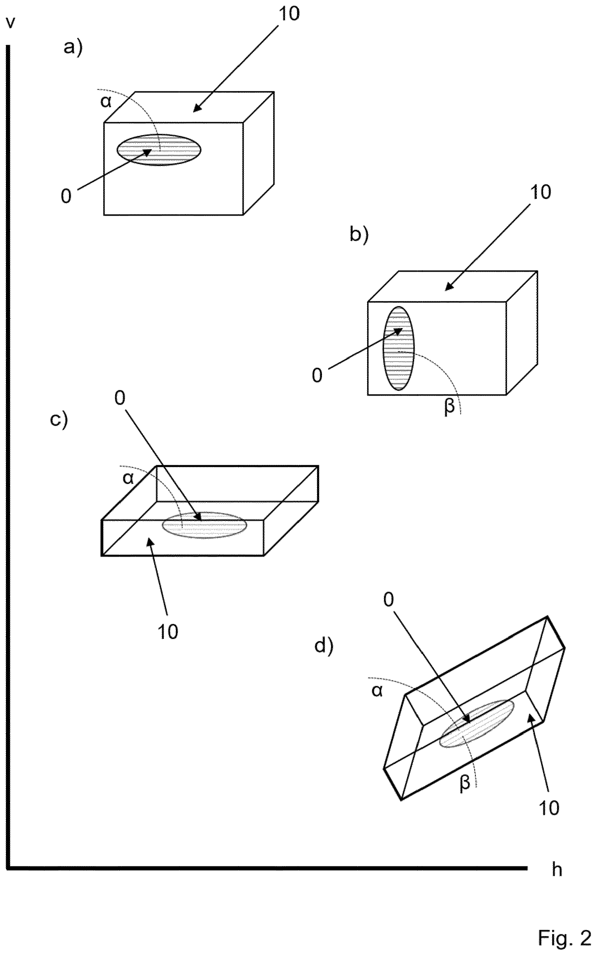

**Figur 2** zeigt eine erfindungsgemäße Vorrichtung **0,** die in ein Objekt **10** integriert **(c)** und **d))** oder auf dessen Oberfläche befestigt **(a)** und **b))** ist. In **a)** und **c)** ist die Längsachse der Vorrichtung **0** parallel zur Horizontalen **h** ausgerichtet und weist daher einen Winkel **α** von 90° zur Vertikalen **v** auf. Umgekehrt ist die Längsachse der Vorrichtung **0** in **b)** parallel zur Vertikalen **v** ausgerichtet und weist daher zur Horizontalen h einen Winkel **β** von 90° auf. Das Objekt **10** sowie die Längsachse der Vorrichtung **0** in **d)** ist dagegen weder zur Vertikalen **v** noch zur Horizontalen **h** parallel ausgerichtet, jedoch ergänzen sich der Winkel **α** zwischen der Längsachse der Vorrichtung **0** und der Vertikalen **v** und der Winkel **β** zwischen der Längsachse der Vorrichtung **0** und der Horizontalen **h** auf 90°.

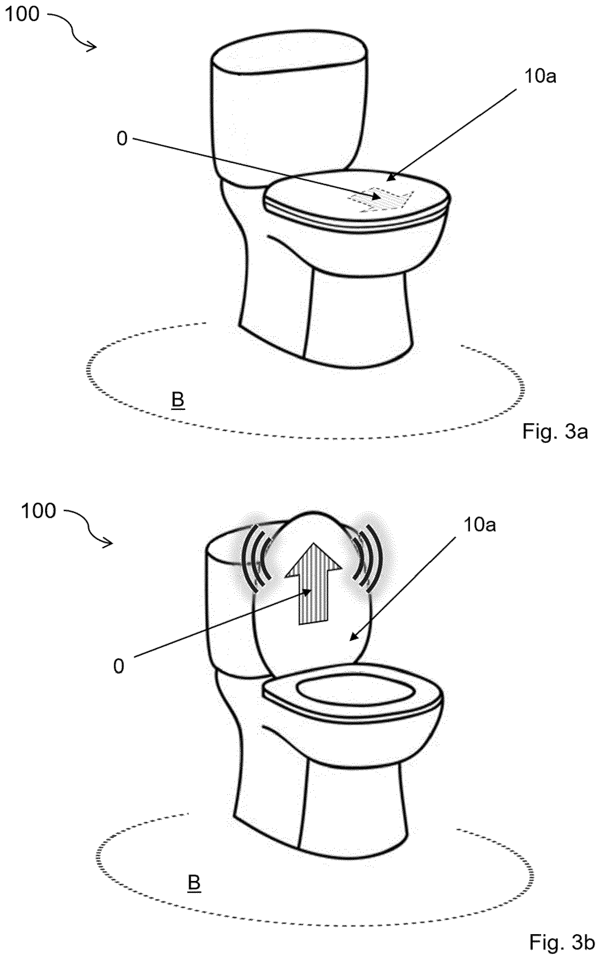

Die **Figuren 3a und 3b** zeigen ein System **100** umfassend ein Objekt in Form eines Toilettendeckels **10a** und eine auf dessen Unterseite befestigte, erfindungsgemäße Vorrichtung **0** in Form eines Pfeils zur Überwachung der Raumlage des Toilettendeckels **10a,** wobei der mindestens eine Sensor und/oder der mindestens eine Aktor der Vorrichtung **0** auf eine Öffnung und/oder Schließung des Toilettendeckels **10a** reagiert.

In **Figur 3a** ist der Toilettendeckel **10a** geschlossen, so dass die Längsachse der erfindungsgemäßen Vorrichtung **0** parallel zur Horizontalen ausgerichtet ist, während der Toilettendeckel **10a** in **Figur 3b** geöffnet und die Längsachse der Vorrichtung **0** parallel zur Vertikalen ausgerichtet ist. Beim Öffnen des Toilettendeckels könnte ein frei programmierbarer Begrüßungstext oder ein Aufmerksamkeitston wiedergegeben werden, nachdem die erfindungsgemäße Vorrichtung **0** eine Person in einem vorgegebenen Bereich **B** um den Toilettendeckel **10a** registriert und sich aktiviert hat. Zudem könnte ein entsprechend aufgenommener Text oder ein Signalton als akustischer Hinweis wiedergegeben werden, wenn die Person den vorgegebenen Bereich **B** um den Toilettendeckel **10a** verlassen hat, ohne den Toilettendeckel zu schließen. Der akustische Hinweis könnte dann so oft wiederholt werden, bis der Toilettendeckel geschlossen ist.

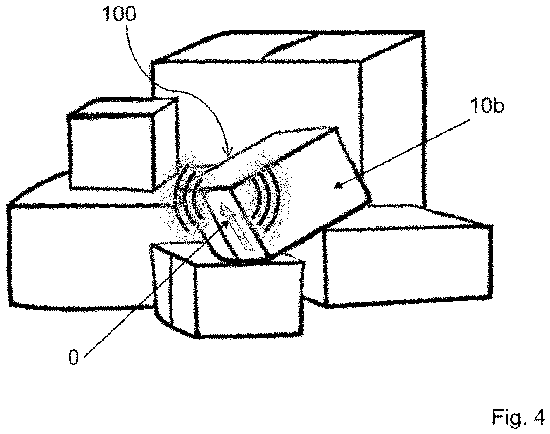

**Fig. 4** zeigt ein System **100,** bei dem eine erfindungsgemäße Vorrichtung **0** in Form eines Pfeils als Transportbegleiter auf der Seitenfläche eines Pakets **10b,** insbesondere enthaltend empfindliche Fracht, befestigt ist. Dabei kann der mindestens eine Sensor und/oder der mindestens eine Aktor der Vorrichtung **0** auf eine nicht korrekte Lagerung des Pakets 10b mittels eines Warntons reagieren und hinweisen, insbesondere wenn der Pfeil und damit die Längsachse der Vorrichtung **0** nicht mehr entgegengesetzt zur Lotrichtung ausgerichtet ist. Die nicht korrekte Lagerung könnte über den gesamten Transportweg aufgezeichnet werden, um dem Transporteur eventuelle Beschädigungen nachzuweisen.

### Bezugszeichen:

- **0**: Vorrichtung, vorzugsweise in Form eines ebenen Bauteils mit mindestens einer Längsachse (z.B. eines Rechteckts, einer Ellipse, eines Pfeils)
- **1**: Stromversorgung der Vorrichtung **0**
- **2**: integrierte Schaltung der Vorrichtung **0**
- **3**: Akustikmodul der Vorrichtung **0**
- **4**: Steuerungseinheit der Vorrichtung **0**
- **41**: Sensor der Steuerungseinheit **4**
- **42**: Aktor der Steuerungseinheit **4**
- **43**: Zeitmodul der Steuerungseinheit **4**
- **44**: Element zur Anwesenheitserkennung der Steuerungseinheit **4,** insbesondere Bewegungsmelder oder Präsenzmelder
- **5**: Speichereinheit der Vorrichtung **0**
- **10**: Objekt, dessen Raumlage zu bestimmen ist, insbesondere Toilettendeckel **10a** oder gefährliche Fracht (Paket) **10b**
- **100**: System umfassend ein Objekt **10** und eine Vorrichtung **0**

- **B**: vorgegebener Bereich um das Objekt **10**
- **h**: Horizontale
- **v**: Vertikale

- **α**: Winkel zwischen der Längsachse der Vorrichtung **0** und der Vertikalen **v**
- **β**: Winkel zwischen der Längsachse der Vorrichtung **0** und der Horizontalen **h**

## Patentansprüche

1. Vorrichtung (0) in Form eines ebenen Bauteils mit mindestens einer Längsachse zur Überwachung der Raumlage eines Objekts (10),
umfassend eine Stromversorgung (1) und eine integrierte Schaltung (2) sowie ein programmierbares Akustikmodul (3) zur Wiedergabe mindestens einer Tonaufnahme, und mindestens eine Steuerungseinheit (4), durch welche eine Aktivierung und/oder Deaktivierung des Akustikmoduls (3) bewirkbar ist,
wobei die Steuerungseinheit (4) mindestens einen Sensor (41) und/oder mindestens einen Aktor (42) umfasst, der auf eine Neigungsänderung des Bauteils gegenüber der Vertikalen (v) oder gegenüber der Horizontalen (h) mittels Auslösung der Wiedergabe der mindestens einen Tonaufnahme reagiert, **dadurch gekennzeichnet, dass** die Stromversorgung eine Metall-Luft-Batterie ist.

2. Vorrichtung nach Anspruch 1, **dadurch gekennzeichnet, dass**
das Bauteil eine Klebeschicht aufweist, wobei mit der Klebeschicht das Bauteil an einem Objekt oder an Fracht anbringbar ist, und,
- wobei beim Versuch die Vorrichtung von der Fracht oder dem Objekt zu entfernen eine Tonaufnahme ausgelöst wird und/oder
- die Steuerungseinheit eine Sendeeinheit umfasst, die ein Signal an einen Empfänger übermittelt und/oder
- die Klebeschicht und optional das Bauteil bersten und eine Markierung auf dem Objekt oder an der Fracht angebracht wird.

3. Vorrichtung nach Anspruch 1 oder 2, **dadurch gekennzeichnet, dass**
die Metall-Luft-Batterie eine Zink-Luft Batterie, Lithium-Luft-Batterie, Eisen-Luft-Batterie, Lithium-Luft-Batterie, Natrium-Luft-Batterie, Silicium-Luft-Batterie, Calcium-Luft-Batterie, Aluminium-Luft-Batterie und/oder Magnesium-Luft Batterie ist.

4. Vorrichtung nach einem der Ansprüche 1 bis 3, **dadurch gekennzeichnet, dass**
der mindestens eine Sensor (41) ein Neigungsmesser und/oder der mindestens eine Aktor (42) ein Neigungsschalter ist.

5. Vorrichtung nach einem der Ansprüche 1 bis 4, **dadurch gekennzeichnet, dass**
die Steuerungseinheit (4) ein Zeitmodul (43) umfasst, welches die Wiedergabe der mindestens einen Tonaufnahme nach einer vorgegebenen Zeit abbricht.

6. Vorrichtung nach einem der Ansprüche 1 bis 5, **dadurch gekennzeichnet, dass**
die Steuerungseinheit (4) ferner mindestens ein Element zur Anwesenheitserkennung (44) umfasst, welches eine Aktivierung und/oder Deaktivierung des Akustikmoduls bewirkt, wobei die
das Element zur Anwesenheitserkennung (44)
a. ein Bewegungsmelder ist, der eine Aktivierung des Akustikmoduls (3) bei Anwesenheit und eine Deaktivierung des Akustikmoduls (3) bei fehlender Anwesenheit mindestens einer Person in einem vorgegebenen Bereich (B) um das Objekt (10) bewirkt, oder
b. ein Präsenzmelder ist, der eine Deaktivierung des Akustikmoduls (3) bei Anwesenheit und eine Aktivierung des Akustikmoduls (3) bei fehlender Anwesenheit mindestens einer Person in einem vorgegebenen Bereich (B) um das Objekt (10) bewirkt.

7. Vorrichtung nach einem der Ansprüche 1 bis 6, **dadurch gekennzeichnet, dass**
das Bauteil eine Höhe von größer gleich 0,1 mm bis kleiner gleich 20 mm, bevorzugt größer gleich 1 mm bis kleiner gleich 15 mm, besonders bevorzugt größer gleich 5 mm bis kleiner gleich 10 mm, aufweist.

8. Vorrichtung nach einem der Ansprüche 1 bis 7, **dadurch gekennzeichnet, dass**
das Bauteil ein Aufkleber ist.

9. Vorrichtung nach einem der Ansprüche 1 bis 8, ferner umfassend
eine Speichereinheit (5), die zur Aufzeichnung jeder Neigungsänderung des Bauteils gegenüber der Vertikalen (v) oder gegenüber der Horizontalen (h) vorgesehen ist.

10. Verfahren zur Überwachung der Raumlage eines Objekts (10), in dem
I) eine Vorrichtung (0) nach einem der Ansprüche 1 bis 9 in das Objekt (10) integriert oder auf dessen Oberfläche befestigt, insbesondere geklebt wird, und
II) die Raumlage des Objekts (10) mittels des mindestens einen Sensors (41) und/oder des mindestens einen Aktors (42) überwacht wird.

11. Verfahren nach Anspruch 10, wobei in II)
i. das Akustikmodul (3) beim Eindringen mindestens einer Person in einen vorgegebenen Bereich (B) um das Objekt aktiviert wird, oder
das Akustikmodul (3) beim Verlassen mindestens einer Person eines vorgegeben Bereich (B) um das Objekt (0) aktiviert wird,
und
ii. der mindestens eine Sensor (41) und/oder der mindestens eine Aktor (42) auf eine Neigungsänderung des Objekts (10) gegenüber der Vertikalen (v) oder gegenüber der Horizontalen (h) mittels Auslösung der Wiedergabe der mindestens einen Tonaufnahme reagiert.

12. System (100) umfassend ein Objekt (10) und eine Vorrichtung (0) nach einem der Ansprüche 1 bis 9 zur Überwachung der Raumlage des Objekts (10), **dadurch gekennzeichnet, dass**
die Vorrichtung (0) in das Objekt (10) integriert oder auf dessen Oberfläche befestigt, insbesondere geklebt, ist.

13. System nach Anspruch 12, **dadurch gekennzeichnet, dass**
das Objekt (10) ein Toilettendeckel (10a) ist und der mindestens eine Sensor (41) und/oder der mindestens eine Aktor (42) auf eine Öffnung und/oder Schließung des Toilettendeckels (10a) reagiert.

14. Verwendung der Vorrichtung (0) nach einem der Ansprüche 1 bis 9 als Transportbegleiter, insbesondere zur Überwachung der Raumlage von empfindlicher Fracht (10b) oder an einem Toilettendeckel (10a), wobei der mindestens eine Sensor (41) und/oder der mindestens eine Aktor (42) auf eine Öffnung und/oder Schließung des Toilettendeckels (10a) reagiert.

## Claims

1. Device (0) in the form of a planar component with at least one longitudinal axis for monitoring the spatial position of an object (10),
comprising a power supply (1) and an integrated circuit (2) as well as a programmable acoustic module (3) for reproducing at least one sound recording,
and at least one control unit (4), by means of which activation and/or deactivation of the acoustic module (3) can be effected,
wherein
the control unit (4) comprises at least one sensor (41) and/or at least one actuator (42) which reacts to a change in inclination of the component with respect to the vertical (v) or with respect to the horizontal (h) by triggering the playback of the at least one sound recording, **characterized in that** the power supply is a metal-air battery.

2. Device according to claim 1, **characterized in that**
the component has an adhesive layer, wherein the component can be attached to an object or to cargo with the adhesive layer, and,
- wherein an attempt to remove the device from the cargo or object triggers a sound recording and/or
- the control unit comprises a transmitter unit which transmits a signal to a receiver and/or
- the adhesive layer and optionally the component burst and a mark is applied to the object or the freight.

3. Device according to claim 1 or 2, **characterized in that**
the metal-air battery is a zinc-air battery, lithium-air battery, iron-air battery, lithium-air battery, sodium-air battery, siliconair battery, calcium-air battery, aluminum-air battery and/or magnesium-air battery.

4. Device according to one of claims 1 to 3, **characterized in that**
the at least one sensor (41) is an inclinometer and/or the at least one actuator (42) is an inclination switch.

5. Device according to any one of claims 1 to 4, **characterized in that**
the control unit (4) comprises a time module (43) which interrupts the playback of the at least one sound recording after a predetermined time.

6. Device according to any one of claims 1 to 5, **characterized in that**
the control unit (4) further comprises at least one element for presence detection (44) which effects activation and/or deactivation of the acoustic module, wherein the the element for presence detection (44)
a. is a motion detector which causes the acoustic module (3) to be activated when at least one person is present and deactivated when at least one person is absent in a predetermined area (B) around the object (10), or
b. is a presence detector that deactivates the acoustic module (3) when someone is present and activates the acoustic module (3) when at least one person is not present in a predetermined area (B) around the object (10).

7. Device according to any one of claims 1 to 6, **characterized in that**
the component has a height of greater than or equal to 0.1 mm to less than or equal to 20 mm, preferably greater than or equal to 1 mm to less than or equal to 15 mm, particularly preferably greater than or equal to 5 mm to less than or equal to 10 mm.

8. Device according to any one of claims 1 to 7, **characterized in that**
the component is a sticker.

9. A device according to any one of claims 1 to 8, further comprising
a memory unit (5) which is provided for recording any change in inclination of the component with respect to the vertical (v) or with respect to the horizontal (h).

10. Process for monitoring the spatial position of an object (10), in which
I) a device (0) according to one of claims 1 to 9 is integrated into the object (10) or attached, in particular glued, to its surface, and
II) the spatial position of an object (10) is monitored by means of the at least one sensor (41) and/or the at least one actuator (42).

11. Process according to claim 10, wherein in II)
i. the acoustic module (3) is activated when at least one person enters a predetermined area (B) around the object, or
the acoustic module (3) is activated when at least one person leaves a predetermined area (B) around the object (0),
and
ii. the at least one sensor (41) and/or the at least one actuator (42) reacts to a change in inclination of the object (10) with respect to the vertical (v) or with respect to the horizontal (h) by triggering the reproduction of the at least one sound recording.

12. System (100) comprising an object (10) and a device (0) according to one of claims 1 to 9 for monitoring the spatial position of an object (10), **characterized in that** the device (0) is integrated into the object (10) or attached, in particular glued, to its surface.

13. System according to claim 12, **characterized in that**
the object (10) is a toilet lid (10a) and the at least one sensor (41) and/or the at least one actuator (42) reacts to an opening and/or closing of the toilet lid (10a).

14. Use of the device (0) according to any one of claims 1 to 9 as a transportation companion, in particular for monitoring the spatial position of sensitive cargo (10b) or on a toilet lid (10a), wherein the at least one sensor (41) and/or the at least one actuator (42) reacts to an opening and/or closing of the toilet lid (10a).

## Revendications

1. Dispositif (0) sous forme d'un composant plan avec au moins un axe longitudinal destiné à surveiller la position spatiale d'un objet (10),
comprenant une alimentation électrique (1) et un circuit intégré (2) ainsi qu'un module acoustique programmable (3) pour la lecture d'au moins un enregistrement sonore,
et au moins une unité de commande (4) permettant une activation et/ou une désactivation du module acoustique (3),
**caractérisé en ce que**
l'unité de commande (4) comprend au moins un capteur (41) et/ou au moins un actionneur (42) qui réagit à un changement d'inclinaison du composant par rapport à la verticale (v) ou par rapport à l'horizontale (h) au moyen du déclenchement de la lecture de l'au moins un enregistrement sonore, et **en ce que** l'alimentation électrique est une batterie métal-air.

2. Dispositif selon la revendication 1, **caractérisé en ce que**
le composant comprend une couche adhésive, la couche adhésive permettant de fixer le composant à un objet ou à une cargaison, et
- lorsque l'on tente d'éloigner le dispositif de la cargaison ou de l'objet, un enregistrement sonore étant déclenché et/ou
- l'unité de commande comprend une unité d'émission qui transmet un signal à un récepteur et/ou
- la couche adhésive et, en option, le composant éclatent et un marquage est apposée sur l'objet ou sur la cargaison.

3. Dispositif selon la revendication 1 ou 2, **caractérisé en ce que**
la batterie métal-air est une batterie zinc-air, une batterie lithium-air, une batterie fer-air, une batterie lithium-air, une batterie sodium-air, une batterie silicium-air, une batterie calcium-air, une batterie aluminium-air et/ou une batterie magnésium-air.

4. Dispositif selon l'une des revendications 1 à 3, **caractérisé en ce que**
l'au moins un capteur (41) est un inclinomètre et/ou l'au moins un actionneur (42) est un commutateur d'inclinaison.

5. Dispositif selon l'une des revendications 1 à 4, **caractérisé en ce que**
l'unité de commande (4) comprend un module de temps (43) qui interrompt la lecture de l'au moins un enregistrement sonore après un temps prédéterminé.

6. Dispositif selon l'une des revendications 1 à 5, **caractérisé en ce que**
l'unité de commande (4) comprend en outre au moins un élément de détection de présence (44) qui entraîne une activation et/ou une désactivation du module acoustique,
l'élément de détection de présence (44) étant
a. un détecteur de mouvement qui entraîne une activation du module acoustique (3) en cas de présence et une désactivation du module acoustique (3) en l'absence d'au moins une personne dans une zone prédéterminée (B) autour de l'objet (10), ou
b. un détecteur de présence qui entraîne une désactivation du module acoustique (3) en cas de présence et une activation du module acoustique (3) en l'absence d'au moins une personne dans une zone prédéterminée (B) autour de l'objet (10).

7. Dispositif selon l'une des revendications 1 à 6, **caractérisé en ce que** le composant présente une hauteur supérieure ou égale à 0,1 mm et inférieure ou égale à 20 mm, préférablement supérieure ou égale à 1 mm et inférieure ou égale à 15 mm, plus préférablement supérieure ou égale à 5 mm et inférieure ou égale à 10 mm.

8. Dispositif selon l'une des revendications 1 à 7, **caractérisé en ce que** le composant est un autocollant.

9. Dispositif selon l'une des revendications 1 à 8, comprenant en outre une unité de mémoire (5) prévue pour enregistrer chaque changement d'inclinaison du composant par rapport à la verticale (v) ou par rapport à l'horizontale (h).

10. Procédé de surveillance de la position spatiale d'un objet (10), dans lequel
I) un dispositif (0) selon l'une des revendications 1 à 9 est intégré dans l'objet (10) ou fixé, notamment par collage, sur sa surface, et
II) la position spatiale de l'objet (10) est surveillée au moyen de l'au moins un capteur (41) et/ou de l'au moins un actionneur (42).

11. Procédé selon la revendication 10, dans lequel en II)
i. le module acoustique (3) est activé lorsqu'au moins une personne pénètre dans une zone prédéterminée (B) autour de l'objet, ou
le module acoustique (3) est activé lorsqu'au moins une personne quitte une zone prédéterminée (B) autour de l'objet (0),
et
ii. l'au moins un capteur (41) et/ou l'au moins un actionneur (42) réagit à un changement d'inclinaison de l'objet (10) par rapport à la verticale (v) ou à l'horizontale (h) au moyen du déclenchement de la lecture de l'au moins un enregistrement sonore.

12. Système (100) comprenant un objet (10) et un dispositif (0) selon l'une des revendications 1 à 9, pour la surveillance de la position spatiale de l'objet (10), **caractérisé en ce que** le dispositif (0) est intégré dans l'objet (10) ou fixé, notamment par collage, sur sa surface.

13. Système selon la revendication 12, **caractérisé en ce que**
l'objet (10) est un couvercle de toilettes (10a) et l'au moins un capteur (41) et/ou l'au moins un actionneur (42) réagit à une ouverture et/ou une fermeture du couvercle de toilettes (10a).

14. Utilisation du dispositif (0) selon l'une des revendications 1 à 9 en tant que compagnon de transport, en particulier pour surveiller la position spatiale d'un fret sensible (10b) ou sur un couvercle de toilettes (10a), l'au moins un capteur (41) et/ou l'au moins un actionneur (42) réagissant à une ouverture et/ou à une fermeture du couvercle de toilettes (10a).
